# EUROPÄISCHE PATENTANMELDUNG

(11) **EP 3 057 200 A1**
(43) Veröffentlichungstag der Anmeldung: **17.08.2016**
(21) Anmeldenummer: 16000305.9
(22) Anmeldetag: 08.02.2016
(51) Int. Cl.: H02J 9/06

(54) **ELEKTRISCHE WASSERPUMPE MIT NOTSTROMAGGREGAT**

(30) Priorität: 12.02.2015 AT 692015
(71) Anmelder: Liebhart, Oskar, 1220 Wien (AT)
(72) Erfinder: Liebhart, Oskar, 1220 Wien (AT)
(74) Vertreter: Fox, Tobias

(57) **Zusammenfassung**

Elektrische Wasserpumpe mit einem Leitungseingang und einem Leitungsausgang sowie mit einem ersten Antrieb, die einen zu dem elektrischen ersten Antrieb zusätzlichen zweiten Antrieb aufweist, oder zu welcher eine zweite Pumpe (5') parallel am Leitungseingang (1) und Leitungsausgang (2) geschaltet ist, welcher einen zweiten Antrieb aufweist. Dieser zweite Antrieb ist mit einem elektrischen, mechanischen oder hydraulischen Energiespeichermedium (3) verbunden, wobei weiters ein Schalter (4) vorgesehen ist, durch welchen der zweite Antrieb automatisch einschaltbar ist, wenn die Stromversorgung zu dem ersten Antrieb unterbrochen ist.

## Beschreibung

Die Erfindung betrifft eine elektrische Wasserpumpe mit einem Leitungseingang und einem Leitungsausgang sowie mit einem ersten Antrieb.

Es sind im Stand der Technik verschiedene Arten von elektrischen Wasserpumpen bekannt. Insbesondere bei Heizungsanlagen stellen sie als Heizungspumpen ein standardisiertes Element dar. In ähnlicher Bauweise werden elektrische Wasserpumpen für den Betrieb eines Kreislaufes von zirkulierendem Wasser, wie etwa bei Solar- und Geothermieanlagen oder auch bei Wärmetauschern im Erdreich, verwendet. Ihnen ist gemein, bei einer vergleichsweise geringen Leistungsaufnahme einen gleichmäßigen, langsamen Strom fließenden Wassers zu erzeugen. Nachteilig bei diesen Pumpen ist, daß sie im Fall einer Energieunterbrechung, wie beispielsweise während eines Stromausfalls, stehen bleiben, obwohl während des Stromausfalls oder gerade bei Stromausfall ihre Funktion erforderlich ist.

Es sind im Stand der Technik zur Überbrückung von Stromausfällen auch Notstromaggregate bekannt, die autark betrieben werden und zum Beispiel auch Heizungspumpen mit Strom versorgen können. Notstromaggregate haben jedoch den Nachteil, daß es sich dabei um vergleichsweise aufwendig und teuer konstruierte Vorrichtungen handelt, die zudem regelmäßig gewartet und zur Probe betrieben werden müssen. Ferner stellen sie eine zentralisierte Lösung bei Stromausfällen dar, bei welcher der Notstrom nicht nur für eine Heizungsanlage oder für Umwälzpumpen, sondern beispielsweise für ein gesamtes Gebäude zur Verfügung gestellt werden soll. Eine Dezentralisierung von Notstromquellen oder eine weitere Redundanz ist oftmals wünschenswert. In besonders sensiblen Bereichen, wie beispielsweise Krankenhäusern, ist es in der Vergangenheit schon wiederholt zu Ausfällen von Notstromaggregaten gekommen.

Die US 3,318,372 und die US 7,380,588 zeigen jeweils einen Wasserkreislauf einer Klimaanlage bzw. eines Heizungssystems, welches jeweils über zwei Heizungspumpen verfügt, welche dann in Betrieb sind, wenn die Leistung bei einer einzigen Heizungspumpe nicht ausreicht. Auch hier ist nachteilig, daß die gesamte Anlage jeweils im Falle eines Stromausfalls stehen bleiben muß. Die US 4,947,657 sowie die US 3,995,809 betreffen jeweils eine Klimaanlage, bei welcher eine zweite Pumpe bzw. ein zweiter Kompressor in Gang gesetzt wird, wenn die jeweilige Hauptpumpe ausfällt. Auch bei diesen beiden Lehren besteht der Nachteil darin, daß sie bei Unterbrechung der Hauptenergiequelle (Benzin eines Fahrzeugmotors bei der US 4,947,657, die Netzspannung bei der US 3,995,809) keine Lösung für einen fortgesetzten Betrieb der Klimaanlagen offenbaren.

Die vorliegende Erfindung zielt daher darauf ab, eine elektrische Wasserpumpe der eingangs genannten Art derart weiterzubilden, daß sie ihren Betrieb während eines Stromausfalls fortsetzen kann. Ferner ist es Ziel der Erfindung, den fortgesetzten Betrieb möglichst einfach zu gewährleisten.

Die erfindungsgemäße elektrische Wasserpumpe erreicht dies dadurch, daß sie einen zu dem elektrischen ersten Antrieb zusätzlichen zweiten Antrieb aufweist, der mit einem elektrischen, mechanischen oder hydraulischen Energiespeichermedium verbunden ist, wobei weiters ein Schalter vorgesehen ist, durch welchen der zweite Antrieb einschaltbar ist, wenn die Stromversorgung zu dem ersten Antrieb unterbrochen ist, sowie ein Mittel zum automatischen Betätigen des Schalters im Falle einer Unterbrechung des Stromausfalls, wie etwa ein Abfallrelais. Alternativ zeichnet sich die Erfindung dadurch aus, daß bei der elektrischen Wasserpumpe eine zweite Pumpe parallel am Leitungseingang und am Leitungsausgang geschaltet ist, welche einen zweiten Antrieb aufweist, der mit einem elektrischen, mechanischen oder hydraulischen Energiespeichermedium verbunden ist, wobei weiters ein Schalter vorgesehen ist, durch welchen der zweite Antrieb einschaltbar ist, wenn die Stromversorgung zu dem ersten Antrieb unterbrochen ist, sowie ein Mittel zum automatischen Betätigen des Schalters im Falle einer Unterbrechung des Stromausfalls, wie etwa ein Abfallrelais.

In einer Ausführungsform der Erfindung ist das Energiespeichermedium ein elektrischer Akkumulator, ein Federspeicher, ein Gewichtsspeicher oder ein Druckzylinder.

Zur weiteren Ausgestaltung der Erfindung weist sie einen elektrischen Motor bzw. eine elektrische Schaltung auf, durch welchen bzw. welche das Energiespeichermedium aufziehbar bzw. aufladbar ist. Ergänzend kann noch die Möglichkeit einer manuellen Vorrichtung zum Aufziehen des Energiespeichermediums vorgesehen werden.

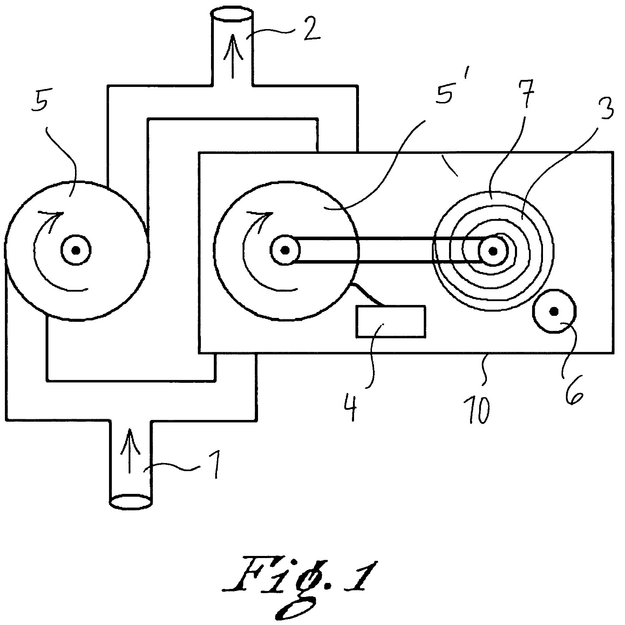

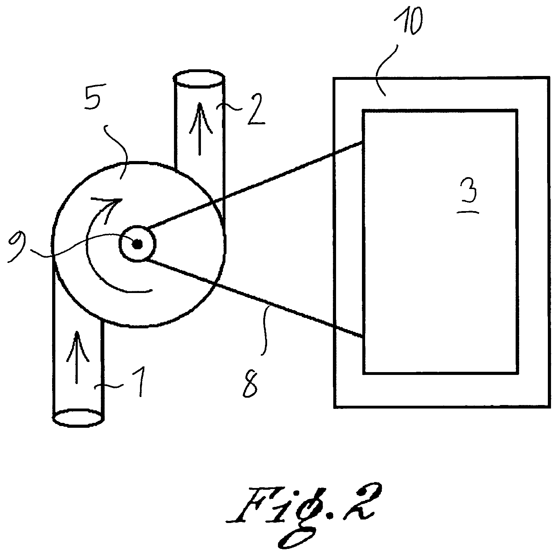

Die Erfindung wird nachstehend anhand eines in den Zeichnungen dargestellten Ausführungsbeispiels näher erläutert. Es zeigen: Fig. 1 einen schematischen Schnitt durch eine elektrische Wasserpumpe und Fig. 2 eine schematische Ansicht einer zweiten Ausführungsform der elektrischen Wasserpumpe.

Ein Stillstand bei Heizungspumpen während des Stromausfalls ist vor allem dann unangenehm, wenn mit festen Brennstoffen geheizt wird und es dadurch zu einer Überhitzung des Kessels kommt, da die Wärme nicht mehr über das Wasser abgeführt wird. Zwar ist die Heizung auch im Falle eines Stromausfalls eingeschränkt funktionsfähig, doch trifft dies nur dann zu, wenn der Kessel im Keller steht und die Heizungsleitungen aus Metall (Kupfer- bzw. Stahlrohre) mit ausreichendem Durchmesser bestehen. In diesem Fall kann nach dem Thermosyphonprinzip geheizt werden. Steht der Heizkessel ebenerdig oder sind die Heizungsleitungen aus Kunststoff, so ist ein Betrieb nach dem Thermosyphonprinzip nicht mehr möglich, da erstens die unterschiedliche Höhe von Kessel und Heizungen nicht mehr gegeben ist, und zweitens im Regelfall die Kunststoffleitungen für die nun sehr hohen Vorlauftemperaturen nicht geeignet sind. Im Zuge der Erfindung wird für die Heizungspumpe nun eine von der Netzspannung zumindest temporär unabhängige andere Energiequelle nutzbar gemacht. Diese Quelle bzw. dieses Energiespeichermedium 3 kann eine Feder 7, wie in Fig. 1 gezeigt, oder ein Druckspeicher hydraulischer oder gasförmiger Art sein. Denkbar ist auch ein elektrisches Speichermedium, wie etwa ein elektrischer Akkumulator, also eine wiederaufladbare Batterie.

Gemäß Fig. 1 wird eine zweite Pumpe 5' parallel zu der üblichen elektrischen Pumpe 5 an demselben Leitungseingang 1 und Leitungsausgang 2 geschaltet. In einem Gehäuse 10 sind nun die weiteren Elemente enthalten, durch die die zweite Pumpe 5' in Gang gesetzt wird, wenn die erste elektrische Pumpe 5 stehenbleibt. Die zweite Pumpe 5' wird per Schalter 4 eingeschaltet. Dies kann händisch erfolgen oder automatisch. So kann der Schalter 4 als Sperre, die bei Stromausfall mittels Abfallrealais gelöst wird, ausgeführt sein. Angetrieben wird die zweite Pumpe 5' dann durch die Feder 7, die analog zu dem Prinzip einer Feder in einer Uhr die gespeicherte potentielle Energie abgibt. Um bei Zentralheizungen und Thermen den Wasserkreislauf aufrechtzuerhalten, weisen die Umwälzpumpen im Regelfall eine Leistungsaufnahme zwischen 20 und 60 Watt auf. Für einen mehrstündigen Ersatzbetrieb wären in der Feder 7 daher etwa 200-400 Wh zu speichern. Bei Inbetriebnahme der Erfindung oder nach Beendigung eines Stromausfalls kann ein elektrischer Motor 6 vorgesehen sein, der die Feder 7 aufzieht und dadurch für einen nächsten Stromausfall präpariert.

Die Feder 7 oder ein anderes Energiespeichermedium 3 kann auch händisch mit Handkurbel aufziehbar sein. Dadurch können längere Stromausfälle überbrückt werden und/oder das Energiespeichermedium 3 kleiner ausgeführt sein. Zum Aufziehen der Feder 7 im Normalbetrieb (Netzspannung vorhanden) kann sie auch mit der Pumpe 5 verbunden sein und durch diese direkt aufgezogen werden, um die Feder 7 für den nächsten Stromausfall zu präparieren.

Gemäß Fig. 2 kann bei einer zweiten Ausführungsform der Erfindung das Energiespeichermedium 3 direkt mit der elektrischen Pumpe 5 verbunden sein. Ebenso wie zuvor wird der mechanische Antrieb per Schalter (in Fig. 2 nicht gezeigt) in Gang gesetzt, wenn ein Stromausfall detektiert wird. Über einen Transmissionsriemen 8, der mit der Achse 9 der Pumpe 5 verbunden ist, wird diese Pumpe 5 dann weiterhin betrieben. Im Stand der Technik sind mechanische Getriebe bekannt, durch welche die Pumpe permanent mit dem zweiten, stillstehenden Antrieb verbunden ist, während sie regulär durch den ersten Antrieb bewegt wird. Der Vorteil dieser Ausführungsform besteht darin, daß nur eine Pumpe benötigt wird.

Es ist ebenso denkbar, den zweiten Antrieb integral in eine elektrische Wasserpumpe einzufügen, die dann ohne jede Anpassungsschritte an die technische Umgebung so in das Heizungssystem eingebaut werden kann wie eine herkömmliche elektrische Wasserpumpe, die jedoch die durch diese Erfindung ermöglichten Vorteile bietet. Eine erfindungsgemäße Wasserpumpe ist zur Verwendung in Privathaushalten, in denen sich der Einsatz von Notstromaggregaten nicht lohnt, geeignet. Ferner kann sie als dezentrales autarkes Bauteil in einer Gebäudetechnik mit Notstromaggregaten für eine Redundanz sorgen.

Anstelle des Federspeicherantriebs können auch alternative Energiespeichermedien 3 verwendet werden. Bei einem Gewichtsspeicherantrieb übernehmen anstelle der Feder 7 ausreichend schwere Gewichte die Aufgabe des Energiespeichers. Das Prinzip gleicht dem von Wanduhren, bei denen Gewichte die Feder 7 ersetzen. Beim Druckluftspeicherantrieb gilt ebenso im wesentlichen dasselbe wie bei einem Federspeicher. Der Speicher kann mittels Luftpumpe manuell oder per elektrischer Pumpe befüllt werden. Bei einem Hydraulikspeicherantrieb ist zwar der technische Aufwand höher als bei einem Federantrieb, bei einem Gewichtsspeicherantrieb oder einem Druckluftspeicherantrieb, jedoch könnten größere Energiemengen gespeichert werden, welche zu einer längeren Einsatzdauer führen. Schließlich ist ein elektrischer Speicher in Form von Batterien denkbar, die über eine entsprechende Schaltung im Normalbetrieb geladen und im geladenen Zustand gehalten werden. Mit einer entsprechenden Batteriekapazität können sehr lange Laufzeiten erzielt werden.

## Patentansprüche

1. Elektrische Wasserpumpe mit einem Leitungseingang und einem Leitungsausgang sowie mit einem ersten Antrieb, **dadurch gekennzeichnet, daß** sie einen zu dem elektrischen ersten Antrieb zusätzlichen zweiten Antrieb aufweist, der mit einem elektrischen, mechanischen oder hydraulischen Energiespeichermedium (3) verbunden ist, wobei weiters ein Schalter (4) vorgesehen ist, durch welchen der zweite Antrieb einschaltbar ist, wenn die Stromversorgung zu dem ersten Antrieb unterbrochen ist, sowie ein Mittel zum automatischen Betätigen des Schalters (4) im Falle einer Unterbrechung des Stromausfalls, wie etwa ein Abfallrelais.

2. Elektrische Wasserpumpe mit einem Leitungseingang und einem Leitungsausgang sowie mit einem ersten Antrieb, **dadurch gekennzeichnet, daß** eine zweite Pumpe (5') parallel am Leitungseingang (1) und am Leitungsausgang (2) geschaltet ist, welche einen zweiten Antrieb aufweist, der mit einem elektrischen oder mechanischen Energiespeichermedium (3) verbunden ist, wobei weiters ein Schalter (4) vorgesehen ist, durch welchen der zweite Antrieb einschaltbar ist, wenn die Stromversorgung zu dem ersten Antrieb unterbrochen ist, sowie ein Mittel zum automatischen Betätigen des Schalters (4) im Falle einer Unterbrechung des Stromausfalls, wie etwa ein Abfallrelais.

3. Elektrische Wasserpumpe nach Anspruch 1 oder 2, **dadurch gekennzeichnet, daß** das Energiespeichermedium (3) ein elektrischer Akkumulator, ein Federspeicher, ein Gewichtsspeicher oder ein Druckzylinder ist.

4. Elektrische Wasserpumpe nach einem der Ansprüche 1 bis 3, **dadurch gekennzeichnet, daß** sie einen elektrischen Motor (6) bzw. eine elektrische Schaltung aufweist, durch welchen bzw. welche das Energiespeichermedium (3) aufziehbar bzw. aufladbar ist.
